# EUROPEAN PATENT APPLICATION

(11) **EP 1 555 706 A1**
(43) Date of publication of application: **20.07.2005**
(21) Application number: 05000617.0
(22) Date of filing: 13.01.2005
(51) Int. Cl.: H01M 8/00, H01M 8/24, G09B 23/24

(54) **Functional test and demonstration apparatus for fuel cell power system**

(30) Priority: 16.01.2004 SG 200410457
(71) Applicant: Asia Pacific Fuel Cell Technologies, Ltd., Chunan, Miaoli 350 (TW)
(72) Inventor: Hsu, Yao-Sheng, Wenshan Chiu Taipei Taiwan 116 (TW)
(74) Representative: Goddar, Heinz J., Dr.

(57) **Abstract**

A functional test and demonstration apparatus is provided for a fuel cell power system, which includes a mainframe for supporting a fuel cell stack. A hydrogen supply module supplies hydrogen to the fuel cell stack, and excessive hydrogen flows out from a hydrogen gas outlet of the fuel cell stack. Air is drawn in and supplied to the fuel cell stack by a blowing device, and flows out from an air outlet of the fuel cell stack. A liquid cooling device is connected between a coolant inlet and a coolant outlet of the fuel cell stack to remove heat from the fuel cell stack. A humidifier is used to properly humidify the air before it is conveyed to the fuel cell stack. The signals detected from various components of the fuel cell power system are sent to a control device which controls the operation of the components.

## Description

### FIELD OF THE INVENTION

The present invention relates generally to a fuel cell power system, and in particular to a functional test and demonstration apparatus for a fuel cell power system with liquid cooling device.

### BACKGROUND OF THE INVENTION

A fuel cell is a power-generating unit that generates electrical energy through electrochemical reaction of hydrogen and oxygen. The fuel cell has the advantages of high energy conversion efficiency, clean exhaust, low noise, and environmentally friendly, as compared with a conventional internal combustion engine. In the past few years, it has been highly promoted and developed worldwide.

Fuel cell is classified based on the electrolyte thereof. Among these known fuel cells, the proton exchange membrane fuel cell (PEMFC) is the most-developed technique, having the advantages of low operation temperature, fast start-up and high power density. As a whole, PEMFC has high value for industry.

In the course of research and development or maintenance, in order to perform inspection of functionality and performance upon a fuel cell stack, the fuel cell stack has to be connected physically and electrically with other components for form a fuel cell power system. Moreover, in promotion of new product, exhibition and training of workers, either demonstrators or sellers have to repeatedly set up the pipelines and electrical connections among the various components of the fuel cell power system in order to illustrate the operation principle and demonstrate the functions of the fuel cell power system to clients or trainees.

However, there is no appropriate apparatus in the market that can facilitate the functional tests or demonstration of a fuel cell power system. It is not easy for the clients to know well the features of the fuel cell power system. Moreover, to perform inspection of functionality and performance in the course of research and development and maintenance, researchers and technicians often spend a lot of time in setting up and testing the pipelines and electrical connections among various components of the fuel cell power system.

Because a fuel cell power system includes many components, when one or more of these components does not work properly, the fuel cell power system cannot operate properly. Anyway, it is not easy and takes lot of time for the researchers and technicians to find out the cause(s). All these drawbacks are unfavorable to the promotion and application of fuel cell.

It is thus desired to provide a functional test and demonstration apparatus for a fuel cell power system, which is easy to operate and simple to set up.

### SUMMARY OF THE INVENTION

An object of the present invention is to provide a functional and demonstration apparatus for a fuel cell power system. It is easy to set up the piping system and electrical connections, and therefore it facilitates the inspection of functionality and performance to the fuel cell power system.

Another object of the present invention is to provide a functional and demonstration apparatus for a fuel cell power system. With the apparatus, the operation principle, electrical characteristics and gas supplies of the fuel cell power system are clearly displayed. Accordingly, the user can know well about the configuration and performance of the fuel cell power system.

A further object of the present invention is to provide a functional test and demonstration apparatus for a fuel cell power system comprising a liquid cooling device. Liquid cooling device can efficiently remove heat from the fuel cell power system and maintain the fuel cell power system at appropriate temperature range.

To achieve the above objects, in accordance with the present invention, there is provided a functional test and demonstration apparatus for a fuel cell power system. The functional test and demonstration apparatus comprises a mainframe for supporting a fuel cell stack. A hydrogen supply module and an air blowing device are provided for the anode and cathode of fuel cell stack individually and flow rate can be controlled according to the power demand. A liquid cooling device is connected to the fuel cell stack for removing heat from the fuel cell stack. A humidifier is used to properly humidify the air before it is flowed into the fuel cell stack. A DC electronic load is used to measure the performance of the fuel cell stack. The signals detected from various components of the fuel cell power system are sent to a control device which controls the operation of the components.

### BRIEF DESCRIPTION OF THE DRAWINGS

The present invention will be apparent to those skilled in the art by reading the following description of a preferred embodiment thereof, with reference to the attached drawings, in which:

**Figure 1** is a perspective view of a functional test and demonstration apparatus constructed for a fuel cell power system in accordance with a preferred embodiment of the present invention;

**Figure 2** is a system block diagram of the fuel cell power system of the present invention; and

**Figure 3** is a front plane view showing a connection and display panel of the functional test and demonstration apparatus of **Fig. 1**.

### DETAILED DESCRIPTION OF THE PREFERRED EMBODIMENTS

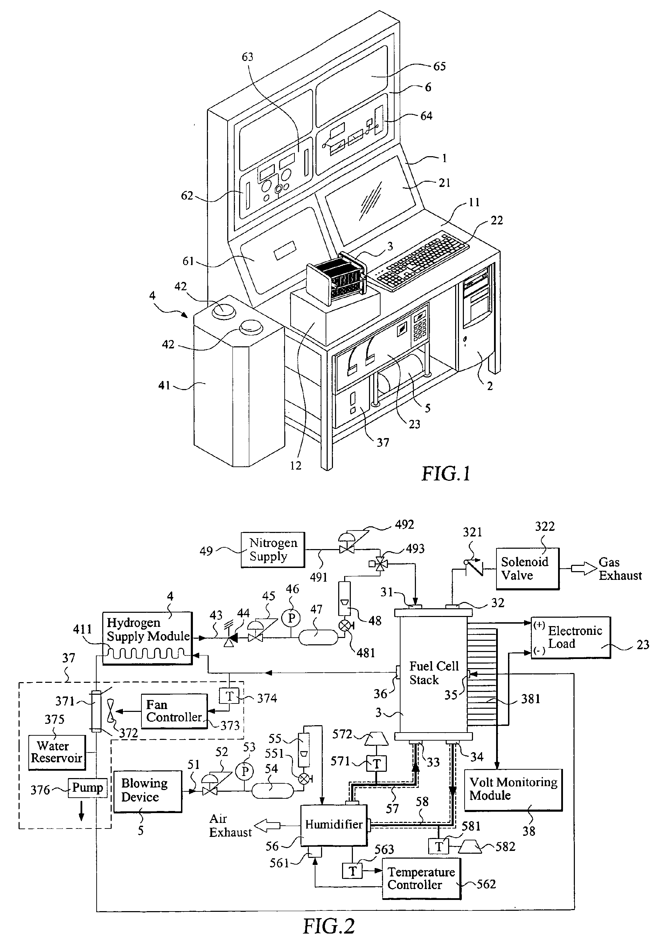

With reference to the drawings and in particular to **Figure 1**, a functional test and demonstration apparatus for a fuel cell power system in accordance with the present invention is shown. The functional test and demonstration apparatus comprises a mainframe **1** for supporting a control device **2**. The control device **2** is coupled with a display **21** and an input device **22** such as a keyboard. The display **21** shows the performance and data, including signals, parameters, charts and so on, of the fuel cell power system.

A stand **12**, which has an inclined top surface, is provided on a plane surface of the mainframe **1** for supporting a fuel cell stack **3**. The fuel cell stack **3** is placed in a manner, such that one end of the fuel cell stack **3**, where a hydrogen gas outlet **32** and an air outlet **34** are arranged, is positioned at a vertically lower position. This allows the water produced in electrochemical reaction to be drained smoothly out from the fuel cell stack **3**.

Also, a DC electronic load **23** is disposed on the mainframe **1**, which acts as a load simulator for the fuel cell stack **3**.

A liquid cooling device **37** is arranged at an appropriate position on the mainframe **1**, for removing heat from the fuel cell stack **3**.

Hydrogen is supplied to the fuel cell stack **3** by a hydrogen supply module **4**. The hydrogen supply module **4** comprises at least one chamber **41** with a heat exchanger **411** and a plurality of low pressure hydrogen storage canisters **42** accommodated therein. The hydrogen supply module **4** is arranged at one side of the mainframe **1** and connected to the fuel cell stack **3** by means of tubes for supplying hydrogen to the fuel cell stack **3** for performing electrochemical reaction therein. The hydrogen supply module **4** may comprise other hydrogen supply device to provide hydrogen to the fuel cell stack **3**.

Moreover, the fuel cell power system includes a blowing device **5** for drawing in and supplying air to the fuel cell stack **3** for proceeding electrochemical reaction. Air is conveyed to the fuel cell stack **3** by an air supply pipeline.

The mainframe **1** comprises a connection and display panel **6** for connection of pipelines and wires and display of various data and performance of the fuel cell stack **3**, including hydrogen gas supply, air supply, humidity of inlet air, monitored parameters like voltage, current, temperature and so on. The detailed functions of the connection and display panel **6** will be discussed later.

**Fig. 2** is a system block diagram showing connections among the various components of the fuel cell power system. The fuel cell stack **3** comprises a plurality of membrane electrode assemblies (MEA). Each of the membrane electrode assemblies includes an anode catalyst layer, a proton exchange membrane and a cathode catalyst layer, forming a basic unit for performing electrochemical reaction. The membrane electrode assembly is stacked and combined with a hydrogen gas diffusion layer and a bipolar plate to form a cell unit. Further, a liquid flow field is arranged between the hydrogen bipolar plate and air bipolar plate to remove heat therefrom and maintain the fuel cell stack at a proper operation temperature range. The cell units are stacked, and then mounted with current collectors and endplates at the two ends thereof to form a fuel cell stack. The membrane electrode assemblies are electrically connected in series to generate a D.C. power with predetermined voltage value and current value. The power is supplied to the electronic load **23** via a positive terminal (+) and a negative terminal (-).

To perform electrochemical reaction, the fuel cell stack **3** requires a continuous and sufficient supply of hydrogen and air. Hydrogen is conveyed from the hydrogen supply module **4** via a hydrogen supply pipeline **43** to a hydrogen gas inlet **31** of the fuel cell stack **3**. The hydrogen supply pipeline **43** comprises an emergency button **44**, a pressure regulating valve **45** and a pressure gauge **46**. The emergency button **44** is used for terminating the hydrogen supply to the fuel cell stack **3** and power supply from the fuel cell stack **3** at emergency. The pressure regulating valve **45** includes a pressure reducing valve, and is used to regulate and reduce the hydrogen pressure. The pressure gauge **46** measures and indicates the hydrogen pressure in the hydrogen supply pipeline **43**.

Moreover, a mass flow controller **47** and a gas flow rotameter **48** are arranged at the hydrogen supply pipeline **43**. The mass flow controller **47** is a precise integrated device enable to provide flow metering and flow control, which is used to measure the mass flow rate of hydrogen. The gas flow rotameter **48** is provided with a see-through window, through which the researcher or user can monitor the hydrogen flow. Besides, a hydrogen flow control knob **481** is arranged preceding the gas flow rotameter **48**, which is used for cross verification of the mass flow controller **47** and a gas flow rotameter **48**.

The hydrogen supply pipeline **43** is connected with a nitrogen supply pipeline **491** and a hydrogen gas inlet **31** of the fuel cell stack **3** by a three-way valve **493**. Nitrogen is supplied from a nitrogen supply **49** through the nitrogen supply pipeline **491**. A pressure regulating valve **492** is disposed at the nitrogen supply pipeline **491** for regulating the nitrogen pressure. To enhance the performance and maintain the stability of the fuel cell stack **3**, nitrogen is supplied to the fuel cell stack **3** through the three-way valve **493** for purging the impure gases or residual hydrogen gas in the hydrogen supply pipeline **43** before and after the operation of the fuel cell stack **3**.

Hydrogen flows through the hydrogen gas inlet **31** and reacts with oxygen to perform electrochemical reaction in the fuel cell stack **3**. Excessive hydrogen is conveyed to flow out from the hydrogen gas outlet **32** of the fuel cell stack **3**. The hydrogen gas outlet **32** is connected with a check valve **321** and a solenoid valve **322**. The check valve **321** allows hydrogen gas to flow in one direction only, namely, from the hydrogen gas outlet **32** to a gas exhaust. Moreover, the solenoid valve **322** can be driven to open or close, for the purpose of draining the water accumulated in the fuel cell stack.

Hydrogen can be supplied either by close loop or by open loop system, depending on requirements. When using open loop system, the hydrogen flow rate may be fixed or varied. The hydrogen flow rate can be varied by changing the Stoichiometric ratio of hydrogen to oxygen, depending on the fuel cell output voltage and current. When using close loop system, the hydrogen consumption rate is measured and compared with the theoretical value and output power of the fuel cell stack. Accordingly, the performance of the fuel cell stack **3** is known.

For the reaction air, the blowing device **5**, which may comprise an oil less air compressor, draws in air and supplies air to an air inlet **33** of the fuel cell stack **3** through the air supply pipeline **51**. The air supply pipeline **51** comprises a pressure regulating valve **52** for regulating the air pressure, a pressure gauge **53** for measuring the air pressure, and a mass flow controller **54** for metering and controlling air mass flow rate. Also, the air supply pipeline is provided with a gas flow rotameter **55** which enables the researcher or user to view the air flow. An air flow control knob **551** is arranged preceding the gas flow rotameter **55**, which is used for cross verification of the mass flow controller **54** and gas flow rotameter **55**.

Air is supplied by open loop system. The air flow rate may be fixed or varied. The air flow rate is varied by changing the Stoichiometric ratio of hydrogen to oxygen, depending on the fuel cell output voltage and current. Accordingly, the influence of air flow rate to the performance of the fuel cell stack **3** can be studied.

The air supply pipeline **51** further comprises a humidifier **56**. The reaction air is humidified by the humidifier **56** before flowing into the fuel cell stack **3**, so that the reaction air contains an appropriate amount of moisture which is important for the normal operation of the fuel cell stack **3**. The conduit connecting the humidifier **56** and the air inlet **33** of the fuel cell stack **3** is heat-insulated by a thermal sleeve **57**. In this way, the air humidity is maintained. The air supply pipeline **51** is provided with a temperature sensor **571** for detecting the inlet air temperature and a temperature meter **572** for indicating the inlet air temperature.

Air is conveyed to the fuel cell stack **3** via the air inlet **33** to perform electrochemical reaction therein. Excessive air flows out from the air outlet **34** of the fuel cell stack **3**, via the humidifier **56** to an air exhaust. The conduit connecting between the fuel cell stack **3** and the humidifier **56** is heat-insulated by a thermal sleeve **58**. The air supply pipeline is also provided with a temperature sensor **581** for detecting the outlet air temperature and a temperature meter **582** for indicating the outlet air temperature. The efficiency of the humidifier **56** can be known from the temperatures of the inlet air and the outlet air by reading the inlet air temperature meter **572** and outlet air temperature meter **582**.

Besides, the humidifier **56** is equipped with a heater **561** such as a heating pad and a temperature controller **562**. By means of the temperature controller **562**, the temperature of the humidifier **56** is controlled, and in turn, humidification of the humidifier **56** to inlet air is regulated to some extent. Accordingly, the effect of the air humidity to the performance of the fuel cell stack **3** can be examined. The temperature of the humidifier **56** is detected by a temperature sensor **563**.

Furthermore, the fuel cell stack **3** has a coolant inlet **35** and a coolant outlet **36**. The coolant inlet **36** is connected with the liquid cooling device **37**, which comprises a heat exchanger **371**, a cooling fan **372**, a fan controller **373**, a temperature sensor **374**, a water reservoir **375** and a pump **376**. The temperature sensor **374** detects a temperature of the coolant flowing out from the coolant outlet **36**. According to the coolant temperature detected, the fan controller **373** controls the operation of the cooling fan **372**. Thereby, the coolant is properly cooled. Then, the coolant is pumped to the coolant inlet **35** of the fuel cell stack **3** by the pump **376**.

The coolant is conveyed to the hydrogen supply module **4** to heat the hydrogen storage canisters **42** therein before it is conveyed to the heat exchanger **372**. Physically, when hydrogen is released, it absorbs heat from the surrounding. The heat provided by the coolant promotes release of hydrogen from the hydrogen storage canisters **42**. On the other hand, the hydrogen storage canisters **42** absorb heat from the coolant and reduce the coolant temperature.

Besides, the fuel cell power system comprises a volt monitoring module **38** which is connected with guide wires **381** of the cell units for measuring the voltages thereof. From the volt monitoring module **38**, the user can observe the performance of the various cell units. To study the effects of various parameters to the performance of the fuel cell stack **3**, the user may vary the operation parameters and observe the output voltages of the cell units individually.

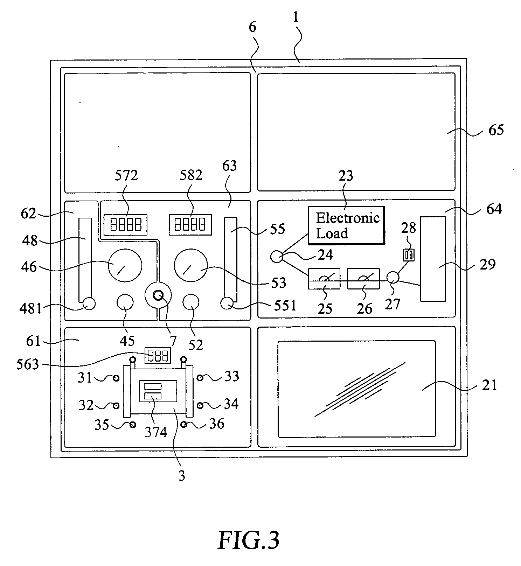

Please refer to **Figure 3** which shows a connection and display panel of the functional test and demonstration apparatus in accordance to a preferred embodiment of the present invention. The connection and display panel **6** is mainly divided into five regions, namely a fuel cell stack and gas supply connection region **61**, an anode gas supply region **62**, a cathode gas supply region **63**, a load display region **64** and an auxiliary display region **65**.

The connection and display panel **6** is provided with a plurality of joints for connection of the various components of the fuel cell power system. To clearly specify the functions of the joints, each of the joints is labeled with the same reference number as the connecting component.

The fuel cell stack and gas supply connection region **61** comprises a joint **31** for connecting to the hydrogen gas inlet **31**, a joint **32** for connecting to the hydrogen gas outlet **32**, a joint **33** for connecting to the air inlet **33**, a joint **34** for connecting to the air outlet **34**, a joint **35** for connecting to the coolant inlet **35** and a joint **36** for connecting to the coolant outlet **36**.

A temperature indicator **374** is arranged on the fuel cell stack and gas supply connection region **61** for indicating the operating temperature of the fuel cell stack **3**. Also, a temperature indicator **563** is arranged for indicating the temperature of the humidifier **56**.

The pressure regulating valve **45**, the pressure gauge **46**, the rotameter **48** and the hydrogen flow control knob **481** are arranged on the anode gas supply region **62**. Similarly, the pressure regulating valve **52**, the pressure gauge **53**, the gas flow rotameter **55**, the air flow control knob **551**, and the temperature meters **572**, **582** are arranged on the cathode gas supply region **63**. In addition, an emergency button **7** is arranged at an appropriate position between the anode gas supply region **62** and the cathode gas supply region **63**, for terminating the hydrogen supply to the fuel cell stack **3** and power output from the fuel cell stack **3** in case of emergency.

The load display region **64** is provided with a load switch **24**, a voltmeter **25**, an ammeter **26**, an AC power switch **27**, an AC power socket **28** and a lamp **29**. The functional test and demonstration apparatus can operate in two modes; one is for functional test and the other is for demonstration. The load switch **24** is used to turn the functional test and demonstration apparatus to perform functional test or demonstration. And, the functional test and demonstration apparatus is provided with a DC/AC converter to convert the DC power generated by the fuel cell stack **3** to AC power. By turning on the AC power switch **27**, AC power is supplied to the AC power socket **28** or the lamp **29**.

The auxiliary display region **65** enables the display of additional systems or parts. For example, the piping system and the control circuit of the fuel cell power system may be displayed on the auxiliary display region **65**. Of course, the auxiliary display region **65** may also comprise other functions according to the training or demonstration objectives.

The control device **2** may comprise a PC computer or a control circuit. The control device **2** includes a receiving interface and an output interface. The receiving interface receives the signals from the various components of the functional test and demonstration apparatus, and the output interface controls the operation of the components. Please refer to **Fig. 2**. The signals from the temperature sensors **374**, **563**, **571**, **581**, the volt monitoring module **38**, the pressure gauge **46** and the mass flow controllers **47**, **48** are sent via the receiving interface to the control device **2**. Subsequently, via the output interface, the control device **2** drives the components, such as the solenoid valve **322**, mass flow controllers **47**, **48** to operate.

From the preferred embodiment, it is noted that the present invention comprises a systemized arrangement of components and parts for comprehensive understanding of the operation principle or functional testing of the fuel cell power system. All components can be easily connected and assembled. Various detecting or regulating devices are directly arranged on the connection and display panel, making it very easy for reading of parameters or regulation. By means of the present invention, the functional tests or demonstrations of fuel cell power system can be easily and simply performed. In short, the functional and demonstration apparatus of the present invention highly facilitates and assists the illustration of operation principle and performance of functional tests at training of workers, exhibition, and product promotion.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A functional test and demonstration apparatus for a fuel cell power system, comprising:
a fuel cell stack having a hydrogen gas inlet, a hydrogen gas outlet, an air inlet, an air outlet, a coolant inlet and a coolant outlet;
a mainframe, which has a plane surface and supports the fuel cell stack;
a hydrogen supply module, which supplies hydrogen to the hydrogen inlet through a hydrogen supply pipeline, and excessive hydrogen is conveyed out from the hydrogen outlet of the fuel cell stack;
a blowing device, which draws in air and supplies air to the air inlet through an air supply pipeline, and excessive air is conveyed out from the air outlet of the fuel cell stack;
a liquid cooling device, which is connected between the coolant inlet and the coolant outlet for cooling the fuel cell stack;
a humidifier, which is provided at the air supply pipeline, for humidifying the inlet air;
a control device, which receives signals from the functional test and demonstration apparatus and controls the operation of the functional test and demonstration apparatus; and
a connection and display panel, which comprises a plurality of joints for connecting the hydrogen supply pipeline, the air supply pipeline, the fuel cell stack, the control device and the load system, and a plurality of indicating units for indicating an operation of the fuel cell stack.

2. The functional test and demonstration apparatus as claimed in Claim 1, wherein on the plane surface of the mainframe, there is provided with a stand with an inclined top surface for supporting the fuel cell stack, such that the hydrogen gas outlet and an air outlet of the fuel cell stack are positioned at a vertically lower position of the stand.

3. The functional test and demonstration apparatus as claimed in Claim 1, wherein the hydrogen supply module is arranged at one side of the mainframe and connected to the hydrogen inlet of the fuel cell stack by means of hoses, and the hydrogen supply module comprises at least one chamber where a low pressure hydrogen storage canister is accommodated;

4. The functional test and demonstration apparatus as claimed in Claim 1, wherein the hydrogen supply pipeline comprises:
a pressure regulating valve for regulating and reducing the hydrogen pressure;
a pressure gauge for measuring and indicating the hydrogen pressure;
a mass flow controller for measuring the mass flow rate of hydrogen; and
a gas flow rotameter for controlling the hydrogen flow, which is provided with a hydrogen flow control knob in the front.

5. The functional test and demonstration apparatus as claimed in Claim 4, wherein the hydrogen supply pipeline further comprises an emergency button for terminating the hydrogen supply to the fuel cell stack and power supply from the fuel cell stack at emergency

6. The functional test and demonstration apparatus as claimed in Claim 1, wherein the hydrogen supply pipeline is connected with a nitrogen supply pipeline and the hydrogen gas inlet of the fuel cell stack by a three-way valve, in which nitrogen is supplied from a nitrogen supply through the nitrogen supply pipeline.

7. The functional test and demonstration apparatus as claimed in Claim 1, wherein the hydrogen gas outlet is connected with a check valve and a solenoid valve, in which the check valve only allows hydrogen gas to flow from the hydrogen gas outlet to a gas exhaust and the solenoid valve is driven to open or close, for draining the water generated and accumulated in the fuel cell stack.

8. The functional test and demonstration apparatus as claimed in Claim 1, wherein the air supply pipeline comprises:
a pressure regulating valve for regulating the air pressure;
a mass flow controller for metering and controlling air mass flow rate; and
a pressure gauge for measuring the air pressure, which is provided with an air flow control knob in the front.

9. The functional test and demonstration apparatus as claimed in Claim 1, wherein both the conduit connecting the humidifier and the air inlet of the fuel cell stack and the conduit connecting between the air outlet of the fuel cell stack and the humidifier are heat-insulated by thermal sleeves.

10. The functional test and demonstration apparatus as claimed in Claim 1, wherein the air inlet and air outlet of the fuel cell stack are equipped with temperature sensors for measuring the temperatures therein, and thereby the efficiency of the humidifier is derived.

11. The functional test and demonstration apparatus as claimed in Claim 1, wherein the humidifier is equipped with a heater and a temperature controller for controlling the temperature of the humidifier, and by this way, humidification to the inlet air is regulated.

12. The functional test and demonstration apparatus as claimed in Claim 1, wherein the functional test and demonstration apparatus further comprises a volt monitoring module which is connected with guide wires of the cell units of the fuel cell stack for measuring the voltages thereof, for studying the effects of various parameters to the performance of the fuel cell stack.

13. The functional test and demonstration apparatus as claimed in Claim 1, wherein the liquid cooling device comprises a heat exchanger, a cooling fan, a fan controller, a temperature sensor, a water reservoir and a pump, in which the temperature sensor detects a temperature of the coolant flowing out from the coolant outlet, and the fan controller controls the operation of the cooling fan according to the coolant temperature.
